# EUROPÄISCHE PATENTSCHRIFT

(11) **EP 3 665 730 B1**
(45) Veröffentlichungstag und Bekanntmachung des Hinweises auf die Patenterteilung: **26.07.2023**
(21) Anmeldenummer: 18752451.7
(22) Anmeldetag: 06.08.2018
(51) Int. Cl.: H01G 11/40, H01G 11/26, H01G 11/52, H01G 11/84, H01M 50/403, H01M 50/44, H01M 50/46, H01M 10/04

(54) **ALS ELEKTROCHEMISCHE SPEICHERVORRICHTUNG AUSGEBILDETES FASERVERBUNDBAUTEIL SOWIE VERFAHREN ZU DESSEN HERSTELLUNG**
FIBRE COMPOSITE COMPONENT DESIGNED AS AN ELECTROCHEMICAL STORAGE DEVICE AND METHOD FOR THE PRODUCTION THEREOF
COMPOSANT COMPOSITE RENFORCÉ PAR DES FIBRES CONÇU COMME UN DISPOSITIF DE STOCKAGE ÉLECTROCHIMIQUE ET PROCÉDÉ DE FABRICATION DE CE COMPOSANT

(30) Priorität: 11.08.2017 DE 102017118310
(43) Veröffentlichungstag der Anmeldung: 17.06.2020
(73) Patentinhaber: Deutsches Zentrum für Luft- und Raumfahrt e.V., 51147 Köln (DE)
(72) Erfinder: PETERSEN, Jan, 38106 Braunschweig (DE)
(74) Vertreter: REHBERG HÜPPE + PARTNER
(86) Internationale Anmeldenummer: PCT/EP2018/071256
(87) Internationale Veröffentlichungsnummer: WO 2019/030164

(56) Entgegenhaltungen:
- WO-A1-2016/050761
- WO-A2-2013/158910
- JP-A- H02 198 124
- JP-A- S61 110 975
- JP-A- S61 215 772
- US-B1- 6 372 387
- ASP LEIF E ET AL: "Structural power composites", COMPOSITES SCIENCE AND TECHNOLOGY, ELSEVIER, AMSTERDAM, NL, Bd. 101, 5. Juli 2014 (2014-07-05), Seiten 41-61, XP029046941, ISSN: 0266-3538, DOI: 10.1016/J.COMPSCITECH.2014.06.020 in der Anmeldung erwähnt
- WISEMAN J M ET AL: "An interdigitated gate electrode field effect transistor (IGEFET) for epoxy cure monitoring", 19900521; 19900521 - 19900525, 21. Mai 1990 (1990-05-21), Seite 52, XP010007212,

## Beschreibung

### TECHNISCHES GEBIET DER ERFINDUNG

Die Erfindung betrifft ein Verfahren zur Herstellung einer als elektrochemische Speichervorrichtung ausgebildeten Faserverbundstruktur. Die Erfindung betrifft außerdem ein Faserverbundbauteil, das als elektrochemische Speichervorrichtung ausgebildet ist.

Bei der elektrochemischen Speichervorrichtung handelt es sich um einen Akkumulator oder einen Kondensator, insbesondere einen Superkondensator. Solche elektrochemischen Speichervorrichtungen werden verbreitet eingesetzt. Sie finden überall dort Anwendung, wo elektrische Energie ohne einen ständigen Netzanschluss bereitgestellt werden muss. Dies ist zum Beispiel bei mobilen Anwendungen der Fall. Insbesondere beim Bau von Fahrzeugen ergibt sich aber die Schwierigkeit, dass elektrochemische Speichervorrichtungen zum einen erheblichen Bauraum einnehmen können und zum anderen als zusätzlich verbaute Materialien zum Gesamtgewicht des Fahrzeugs beitragen. Es ist daher von Vorteil, elektrochemische Speichervorrichtungen möglichst in andere Bauteile etwa eines solchen Fahrzeugs zu integrieren. Dabei kann es sich insbesondere um lasttragende oder auskleidende Bauteile handeln, wie etwa Wand- oder Fußbodenstrukturen.

### STAND DER TECHNIK

Es ist bekannt, in Faserverbundstrukturen für eine Doppelnutzung elektrochemische Speichervorrichtungen auszubilden, indem elektrisch leitfähige Fasern, gegebenenfalls durch nichtleitende Fasern als Separator räumlich getrennt, mit einem elektrolytisch wirkenden Harz getränkt werden, wobei die Fasern vor dem Tränken häufig in Faserhalbzeugen angeordnet sind. Somit bilden die Fasern bei geeigneter Anordnung nach dem Aushärten des Harzes eine Elektrode und eine Gegenelektrode und das zu einer Harzmatrix ausgehärtete Harz eine elektrochemische Speichervorrichtung aus. Als elektrolytisch wirkendes Harz kommen etwa Epoxide in Frage, die mit einem Elektrolyten, etwa ionischen Flüssigkeiten oder in Lösungsmitteln gelösten Salzen - d. h. Flüssigkeiten - dotiert wurden.

Ein in dieser Art gebildeter Superkondensator mit zwei Lagen aus einem Kohlenstofffasergewebe als Elektroden mit einer dazwischen angeordneten Lage aus einem Glasfasergewebe als Separator, die mit einem Polymerelektrolyten getränkt sind, ist beispielsweise bekannt aus "Structural Composite Supercapacitors" (N. Shirshova et al., Composites Part A: Applied Science and Manufacturing, 2013, Band 46, S. 96-107).

In "Structural power composites" (L. E. Asp und E. S. Greenhalgh, Composites Science and Technology, 2014, Band 101, S. 41-61) kommen die Autoren bei einer Betrachtung einer Reihe vergleichbar aufgebauter Superkondensatoren u. a. zu dem Schluss, dass für die Verbesserung der Leistungsdichte insbesondere ein Mischungsverhältnis für einen Elektrolyten mit einer Mischung aus strukturellen und gelartigen elektrischen Phasen und Ionen kritisch und herausfordernd sei und dass für das Mischungsverhältnis bislang nur Erfahrungswerte in Hinblick auf eine Balancierung von elektrischer und mechanischer Leistung vorlägen.

Die JP 2003-234015 A offenbart eine Mischung aus zwei Polymermaterialien, von denen eines zur Bildung eines lonenleiters ionisch dissoziierende Bestandteile aufweist. Die Mischung wird unter dem Einfluss eines externen elektrischen Felds ausgehärtet. Dadurch bilden sich entlang des elektrischen Feldes ausgerichtete nicht-sphärische Einlagerungen des ionischen Polymermaterials in dem anderen Polymermaterial.

Die US 9 502 729 B2 offenbart einen folienartigen Elektrolyten mit in einer Polymermatrix eingelagerten ionenleitenden Partikeln. Die Partikel leiten bevorzugt entlang einer ersten Richtung und sind so in der Polymermatrix angeordnet, dass eine Mehrzahl der Partikel mit dieser ersten Richtung senkrecht zu einer Haupterstreckungsebene der Polymermatrix ausgerichtet ist.

Die internationale Patentanmeldung WO 2013/158 910 A2 offenbart einen Kondensator mit einer Elektrode und einer Gegenelektrode aus Kohlenstofffasern und einer Separatorlage aus Papier oder einer Polypropylenmembran, die mit einem ionisch dotierten Polymer getränkt und ausgehärtet werden.

Aus der WO 2016/050761 A1 ist ein Verfahren zum Ausbilden eines Kondensators bekannt, bei dem eine erste Elektrode bereitgestellt wird, bei dem ein erster Elektrolyt, der eine anionische Verbindung umfasst, bereitgestellt wird, wobei die anionische Verbindung elektropolymerisiert wird, um eine dielektrische Schicht auf mindestens einem Teil der ersten Elektrode auszubilden. Der Kondensator wird dann unter Verwendung einer zusätzlichen zweiten Elektrode und eines zweiten Elektrolyten ausgebildet, der gleich dem ersten Elektrolyt oder eine ionische Flüssigkeit oder eine Salzlösung in einem anorganischen Lösungsmittel sein kann. Die Elektroden können Kohlenstoffelektroden sein und beispielsweise ein Kohlenstoffgewebe aufweisen.

Aus der US 6 372 387 B1 sind eine sekundäre Batterie, bei der ein ionenleitfähiges Element zwischen einer positiven Elektrode und einer negativen Elektrode angeordnet ist und derart orientierte lonenkanäle aufweist, dass sie eine erhöhte lonenleitfähigkeit in Richtung zwischen den Elektroden aufweisen, sowie ein Verfahren zur Herstellung dieser sekundären Batterie bekannt. Dabei kann das ionenleitfähige Element eine säulenartige Struktur aufweisen und unter Anwendung eines elektrischen Felds ausgebildet sein. Dieses Element wird anschließend mit einem Elektrolyten beladen. Die Elektroden sind Metallelektroden, wobei das Metall in Faserform vorliegen kann.

Aus der JP S61 215772 A ist ein Verfahren zum Herstellen eines Kohlenstofffaserseils durch Beschichten eines Kohlenstofffaserbündels mit einem Beschichtungsmaterial bekannt. Das Kohlenstofffaserbündel wird in eine wässrige Dispersion des Beschichtungsmaterials eingetaucht und zwischen den beiden wird eine Gleichspannung angelegt. Das Kohlenstofffaserbündel dient als Anode und die wässrige Dispersion des organischen Beschichtungsmaterials als Katode.

Aus der JP H02 198124 A ist ein elektrischer Doppelschichtkondensator bekannt. Eine Elektrolytlösung wird mit Additiven versehen, die eine elektrochemische Polymerisationsreaktion durch anliegende Spannungen hervorrufen und elektrochemisch inaktive hochpolymere Filme auf den Elektroden des Doppelschichtkondensators ausbilden.

Aus "An interdigitated gate electrode field effect transistor (IGEFET) for epoxy cure monitoring" (J. M. Wiseman und E. S. Kolesar, 1990) ist ein Feldeffekttransistor mit einer verschränkten Gateelektrodenstruktur gekoppelt an das Gate eines konventionellen Metall-Oxid-Halbleiter-Feldeffekttransistors (MOSFET) bekannt. Epoxidharz wurde auf der verschränkten Gateelektrode abgelagert und das elektrische Verhalten des IGEFET wurde beobachtet, während das Epoxidharz aushärtete. Das elektrische Verhalten des Feldeffekttransistors ließ dabei Rückschlüsse auf den Aushärtungszustand des Epoxidharzes zu.

Aus der JP S61 110975 A ist eine sekundäre Batterie mit einem organischen Elektrolyten bekannt. Die sekundäre Batterie wird durch Eintauchen eines positiven Pols und eines negativen Pols aus einem leitfähigen Polymer in eine organische elektrolytische Flüssigkeit, in der ein organisches Elektrolyt in einem Lösungsmittel gelöst ist, hergestellt. Der positive und der negative Pol der sekundären Batterie wird unter elektrolytischem Polymerisieren bei einer bestimmten Stromdichte ausgebildet.

### AUFGABE DER ERFINDUNG

Der Erfindung liegt die Aufgabe zugrunde, ein Verfahren zur Herstellung einer als elektrochemische Speichervorrichtung ausgebildeten Faserverbundstruktur mit verbesserten elektrischen und mechanischen Eigenschaften zur Verfügung zu stellen. Des Weiteren liegt der Erfindung die Aufgabe zugrunde, ein Faserverbundbauteil, das als elektrochemische Speichervorrichtung ausgebildet ist, mit solcherart verbesserten elektrischen und mechanischen Eigenschaften bereitzustellen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Faserverbundstrukturen, die von einer Harzmatrix umgebene Fasern aufweisen und daher bei geringer Masse sehr stabil sind, werden in einer Vielzahl von Bauteilen eingesetzt. Es ist daher vorteilhaft, wenn ein solches Faserverbundbauteil, das beispielsweise an einem Fahrzeug, insbesondere einem Luftfahrzeug, bereits ohnehin eingesetzt wird, gleichzeitig die Funktion als elektrochemische Speichervorrichtung wahrnehmen kann. Auf diese Art und Weise muss kein zusätzliches Material oder nur wenig zusätzliches Material, wie etwa Kabel als elektrische Anschlüsse, verbaut werden. In dieser Weise werden Bauraum und Gewicht eingespart.

In einem erfindungsgemäßen Verfahren wird eine als elektrochemische Speichervorrichtung ausgebildete Faserverbundstruktur hergestellt. Dazu werden elektrisch leitfähige Fasern zu einer Elektrode und einer Gegenelektrode angeordnet, wobei sie ein Faserhalbzeug ausbilden können. Ein Harz wird mit einem Elektrolytmaterial dotiert. Mit dem mit dem Elektrolytmaterial dotierten Harz werden die Fasern getränkt und unter Einfluss einer elektrischen Spannung, die an die Elektrode und die Gegenelektrode angelegt wird, das Harz ausgehärtet. Die Elektrode und die Gegenelektrode werden daher direkt in einer Faserverbundstruktur bereitgestellt, deren Teil auch das dotierte Harz bzw. im ausgehärteten Zustand die dotierte Harzmatrix ist. Somit wird in einem Arbeitsschritt ein fertiges Bauteil hergestellt, das insbesondere in seiner Form auf besondere Gegebenheiten angepasst und gegebenenfalls individuell angefertigt werden kann.

Das Elektrolytmaterial neigt in dem Harz dazu, sphärische Einlagerungen auszubilden, wenn Harz und Elektrolytmaterial vermischt werden. Während des üblichen Aushärtens des Harzes würden diese sphärischen Einlagerungen in ihrer Form fixiert und bildeten so "Inseln" des Elektrolyten in einer entstehenden ausgehärteten Harzmatrix, die räumlich voneinander getrennt wären. Für die elektrolytischen Eigenschaften der dotierten Harzmatrix wäre dies abträglich. Das Elektrolytmaterial weist aber Ionen auf. Unter dem Einfluss der elektrischen Spannung folgen die Ionen des Elektrolytmaterials dem elektrischen Feld. Weil negative Ionen und positive Ionen aufgrund ihrer entgegengesetzten Ladungen dabei in entgegengesetzte Richtungen beaufschlagt werden, werden die Einlagerungen des Elektrolytmaterials daher durch das anliegende elektrische Feld parallel zu Feldlinien des elektrischen Felds auseinandergezogen. Das noch nicht ausgehärtete Harz kann entsprechend zurückweichen, sodass eine Verformung der Einlagerungen möglich ist. Die Eigenschaften der angelegten Spannung bzw. des damit erzeugen elektrischen Felds können genutzt werden, um die sich bildenden Einlagerungen des Elektrolytmaterials und damit auch die Eigenschaften des umgebenden Harzes, bzw. der aus dem ausgehärteten Harz gebildeten Harzmatrix zu modifizieren.

Die Spannung kann insbesondere eine Wechselspannung sein. Unter dem Einfluss der elektrischen Wechselspannung folgen die Ionen des Elektrolytmaterials dem dadurch erzeugten ständig seine Richtung wechselnden elektrischen Wechselfeld, so dass die Einlagerungen aufgebrochen werden. Durch gezielte Anpassung einer Amplitude und einer Frequenz der elektrischen Wechselspannung kann diese Bewegung der Ionen mit dem Wechselfeld genutzt werden, um die sich bildenden Einlagerungen des Elektrolytmaterials und damit auch die Eigenschaften des umgebenden Harzes, bzw. der aus dem ausgehärteten Harz gebildeten Harzmatrix zu modifizieren.

Beispielsweise kann eine Größe der Einlagerungen sowie ihre Form beeinflusst werden, so dass die Einlagerungen statt sphärisch etwa oval oder anderweitig langgezogen werden. In logischer Fortführung können in dieser Weise auch Kanäle in der Harzmatrix erzeugt werden. Den Einlagerungen können auf diese Art und Weise Vorzugsrichtungen verliehen werden, da die Einlagerungen der Orientierung des elektrischen (Wechsel-)Felds folgen. Die Richtung des (Wechsel-)Felds kann dabei am einfachsten über die Anordnung der Elektrode und Gegenelektrode an dem Harz gesteuert werden. Über diese Modifikation der Einlagerungen können auch die elektrischen Eigenschaften der Harzmatrix mit den Einlagerungen, wie etwa die ionische Leitfähigkeit oder die Kapazität beeinflusst werden. Insbesondere kann für gleiche elektrolytische Eigenschaften weniger Elektrolytmaterial notwendig sein, als wenn keine Spannung angelegt wird und daher die Einlagerungen sphärisch sind. Durch die Modifikation der Einlagerungen können aber auch mechanische Eigenschaften der Harzmatrix verändert werden, etwa indem durchgehende Kanäle in einer Vorzugsrichtung erzeugt werden oder indem die Ausbildung mit weniger Elektrolytmaterial mehr Harz in der Harzmatrix belässt, so dass die dotierte Harzmatrix mechanisch stabiler ist.

Die elektrisch leitfähigen Fasern, die die Elektrode und die Gegenelektrode ausbilden, müssen zum einen in der Harzmatrix räumlich beabstandet sein, um keinen Kurzschluss auszubilden. Zusätzlich kann ein Separator Einsatz finden, der die Elektrode und die Gegenelektrode trennt: Vor dem Tränken der Fasern mit dem Harz können elektrisch nicht leitfähige Fasern als Separator zwischen der Elektrode und der Gegenelektrode angeordnet werden. Im einfachsten Fall kann dies etwa in Art einer Sandwich-Struktur geschehen. Das heißt, die Fasern der Elektrode und der Gegenelektrode werden jeweils etwa flach in einer Lage angeordnet und zwischen ihnen eine Lage der nicht leitfähigen Fasern als Separator angeordnet.

Die nicht leitfähigen Fasern werden dann ebenfalls mit dem dotierten Harz getränkt und sind daher ebenfalls in der Harzmatrix gebunden und somit auch von dem Elektrolyten durchdrungen bzw. umgeben.

Bei dem Elektrolytmaterial kann es sich beispielsweise um eine ionische Flüssigkeit oder um ein in einem Lösungsmittel gelöstes Salz handeln. Geeignet ist jegliches elektrolytische Material, das wenigstens in einem Ausgangszustand flüssig oder zumindest nicht fest ist. Ebenso wie das Harz kann das Elektrolytmaterial gegebenenfalls unter Temperatureinwirkung aushärten.

Die Wechselspannung kann eine Amplitude von 1 V bis 10 V, beispielsweise eine Amplitude von 2 V bis 3 V aufweisen (die einer Variation der Amplitude zwischen -1 V und +1 V oder bis zu zwischen -1,5 V und +1,5 V entsprechen kann). In diesem Fall oder für eine entsprechend gewählte elektrische Gleichspannung kann die resultierende elektrische Feldstärke etwa 3000 V/m bis 300.000 V/m betragen. Die Wechselspannung kann aber auch eine wesentlich höhere Amplitude, etwa eine Amplitude von 2 kV, aufweisen (die einer Variation der Amplitude zwischen -1 kV und +1 kV entsprechen kann). In diesem Fall oder für eine entsprechend gewählte elektrische Gleichspannung kann die resultierende elektrische Feldstärke etwa 1·10⁶ V/m betragen.

Die Wechselspannung kann eine Frequenz in einem Bereich von 1 Hz bis 1 kHz liegen. Die Untergrenze dieses Bereichs kann auch 5 Hz oder 50 Hz oder 500 Hz betragen und die Obergrenze dieses Bereichs kann unabhängig von der Untergrenze - soweit sie größer als diese bleibt - auch 500 Hz oder 50 Hz oder 15 Hz betragen. Gut geeignet ist eine Frequenz von ungefähr 10 Hz.

Für einen Superkondensator kann sich mit einer solchen vergleichsweise geringen elektrischen Beeinflussung des Elektrolytmaterials während der Herstellung bereits eine deutlich verbesserte Kapazität ergeben. Amplitude und Frequenz der Wechselspannung bzw. die elektrische Feldstärke hängen aber immer von dem erwünschten Ergebnis und den Parametern wie Art des Harzes und des Elektrolyten, Dicke des Separators, des dotierten Harzes oder der elektrochemischen Speichervorrichtung insgesamt, deren Form etc. ab. Beispielsweise kann eine höhere Amplitude oder höhere elektrische Feldstärke gewählt werden, so dass die Ionen stärker beschleunigt werden, oder eine niedrigere Frequenz, so dass die Bewegung der Ionen über längere Zeit in eine Richtung erfolgt, bevor ihre Bewegungsrichtung durch die Richtungsänderung der Wechselspannung umgekehrt wird. In dieser Weise kann etwa die Größe der Einlagerungen beeinflusst werden.

Eine nach dem im Vorhergehenden beschriebenen Verfahren hergestellte elektrochemische Speichervorrichtung weist einen Elektrolyten auf, der eine Harzmatrix mit nicht-sphärischen, in eine Vorzugsrichtung orientierten ionischen Einlagerungen aufweist.

Dabei handelt es sich um einen in der Speichervorrichtung integral angeordneten Elektrolyten, wie etwa ein Harz, mit dem sowohl Fasern, die eine Elektrode und eine Gegenelektrode bilden, als auch Fasern, die einen Separator bilden, getränkt sind. Das erfindungsgemäße Faserverbundbauteil weist zusätzlich zu dem Elektrolyten die Elektrode und die Gegenelektrode auf.

Die nicht-sphärischen Einlagerungen können jegliche Form aufweisen, die von einer Kugelform abweicht. Insbesondere können die Einlagerungen aber langgestreckt, so etwa oval, sein. Im Extrem können sie auch zu Kanälen in der Harzmatrix langgestreckt sein. Dass sie eine Vorzugsrichtung aufweisen, bedeutet, dass die nicht-sphärischen Einlagerungen etwa parallel zueinander angeordnet sind, wobei sich für einzelne Einlagerungen Abweichungen von der Parallelität ergeben können. Auch muss die Parallelität nicht perfekt sein. Bei einer Herstellung nach dem oben genannten Verfahren kann es sein, dass beispielsweise durch Interaktionen mehrerer Ionen die lonenbewegungen nicht alle perfekt den Feldlinien folgen und daher die sich herausbildenden Einlagerungen nicht exakt parallel ausgerichtet sind.

Erfindungsgemäß ist auch ein Faserverbundbauteil, das als elektrochemische Speichervorrichtung ausgebildet ist, wobei das Faserverbundbauteil nach dem oben genannten Verfahren hergestellt sein kann. Das Faserverbundbauteil weist elektrisch leitfähige Fasern auf, die eine Elektrode und eine Gegenelektrode ausbilden und eine Harzmatrix, die mit einem Elektrolytmaterial dotiert ist. Das Elektrolytmaterial bildet nicht-sphärische, in eine Vorzugsrichtung orientierte Einlagerungen in der Harzmatrix aus.

Dabei sind die Fasern in die Harzmatrix eingebettet, wie dies oben für das Verfahren zur Herstellung der als elektrochemische Speichervorrichtung ausgebildeten Faserverbundstruktur beschrieben wurde.

In dem Faserverbundbauteil können elektrisch nicht leitfähige Fasern zwischen den elektrisch leitfähigen Fasern der Elektrode und der Gegenelektrode angeordnet sein und so einen Separator wie oben beschrieben ausbilden. Wie bereits beschrieben kann dabei beispielsweise eine Sandwich-Struktur ausgebildet werden.

Die nicht-sphärischen Einlagerungen können zwischen der Elektrode und der Gegenelektrode angeordnet sein. Insbesondere können die nicht-sphärischen Einlagerungen im Bereich eines Separators angeordnet sein. Wenn der Separator mit den elektrisch nicht leitfähigen Fasern ausgebildet ist, können die nicht-sphärischen Einlagerungen im Bereich der elektrisch nicht leitfähigen Fasern angeordnet sein. Dabei soll unbenommen sein, dass sich die nicht-sphärischen Einlagerungen auch mindestens teilweise in den Bereich der Elektrode und/oder der Gegenelektrode hineinerstrecken können.

Zusätzlich zu den nicht-sphärischen Einlagerungen kann das Elektrolytmaterial in der Harzmatrix auch sphärische Einlagerungen ausbilden. Die sphärischen Einlagerungen können im Bereich der leitfähigen Fasern oder im Bereich der Elektrode und/oder der Gegenelektrode angeordnet sein.

Die beschriebene Anordnung der sphärischen Einlagerungen und der nicht-sphärischen Einlagerungen folgt insbesondere dann, wenn die leitfähigen Fasern direkt als die Elektrode und die Gegenelektrode genutzt werden, an die die während des Aushärtens wirksame Spannung angelegt wird. Weil die leitfähigen Fasern und gegebenenfalls die nicht leitfähigen Fasern oder auch ein zwischen den leitfähigen Fasern gebildeter Zwischenraum oder anderweitiger Separator für ein besonders einfaches Herstellungsverfahren mit dem mit dem Elektrolytmaterial dotierten Harz gemeinsam infundiert werden, sind dann die Einlagerungen auch im Bereich der leitfähigen Fasern angeordnet. Im Bereich der leitfähigen Fasern, also in der Elektrode oder der Gegenelektrode selbst, wirkt aber kein elektrisches Feld oder ggf. nur ein schwaches elektrisches Feld. Kein Feld wirkt auch in einem von der Gegenelektrode aus gesehen hinter der Elektrode angeordneten Bereich des Faserverbundbauteils und in einem von der Elektrode aus gesehen hinter der Gegenelektrode angeordneten Bereich des Faserverbundbauteils. Die Einlagerungen in den beschriebenen Bereichen werden somit nicht oder nur schwach verformt und bleiben ganz oder im Wesentlichen sphärisch. Wenn hingegen eine elektrische Spannung über externe Elektroden und somit von außen an das Faserverbundbauteil angelegt würde, dann würden im Wesentlichen alle Einlagerungen verformt, weil das elektrische Feld über die gesamte Faserverbundstruktur und damit über alle Einlagerungen wirkt.

Das im Vorhergehenden beschriebene Harz bzw. in seinem ausgehärteten Zustand die Harzmatrix kann etwa ein Duroplast oder ein Thermoplast sein. Beispielsweise kann das Harz oder die Harzmatrix ein Epoxid sein. Geeignet ist aber auch jedes andere Material, das zum Tränken von Fasern - ggf. in Faserhalbzeugen angeordnet - geeignet ist, das also in einem ersten Zustand mindestens zähflüssig ist und unter Temperatureinwirkung, ggf. reversibel, aushärtet. Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Einlagerung die Rede ist, ist dies so zu verstehen, dass genau eine Einlagerung, zwei Einlagerungen oder mehr Einlagerungen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Elektrolyten, insbesondere ein Elektrolytbauteil, gemäß dem Stand der Technik.
- **Fig. 2**: zeigt einen Elektrolyten, insbesondere ein Elektrolytbauteil, in dem nichtsphärische Einlagerungen ausgebildet sind.
- **Fig. 3**: zeigt ein Faserverbundbauteil, das als elektrochemische Speichervorrichtung ausgebildet ist.
- **Fig. 4**: illustriert schematisch einen Teilschritt eines Verfahrens zur Herstellung des Faserverbundbauteils nach Fig. 3 durch Anlegen einer Spannung.
- **Fig. 5**: illustriert schematisch einen weiteren Teilschritt des Verfahrens nach Fig. 4 zur Herstellung des Faserverbundbauteils nach Fig. 3 durch Umkehren der Spannung.
- **Fig. 6**: ist ein Ablaufdiagramm eines erfindungsgemäßen Verfahrens.
- **Fig. 7**: zeigt beispielhaft ein Spannungs-Strom-Diagramm einer Cyclovoltammetrie an einer herkömmlichen elektrochemischen Speichervorrichtung und an einer mit dem erfindungsgemäßen Verfahren nach Fig. 6 hergestellten elektrochemischen Speichervorrichtung.

### FIGURENBESCHREIBUNG

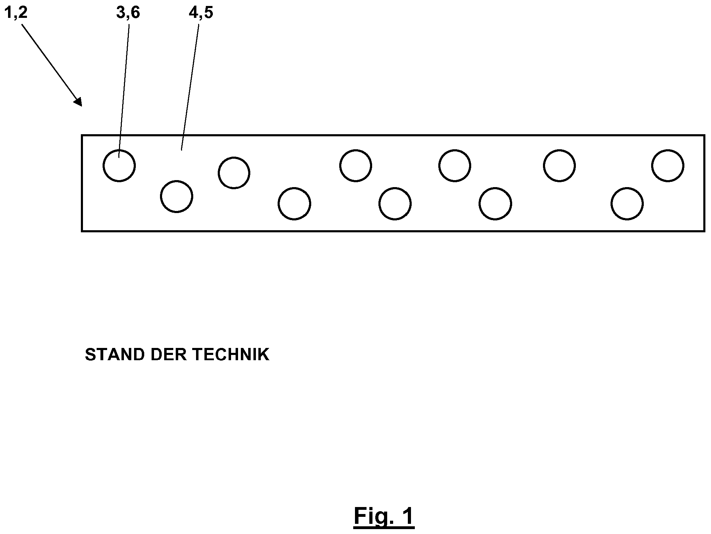

**Fig. 1** zeigt ein Elektrolytbauteil 1 oder einen Elektrolyten 2 aus einem mit einem Elektrolytmaterial 3 dotierten Harz 4, das zu einer Harzmatrix 5 ausgehärtet wurde, nach dem Stand der Technik. Das Elektrolytbauteil 1 oder insbesondere der Elektrolyt 2 können Teil einer nicht dargestellten elektrochemischen Speichervorrichtung sein, insbesondere einer elektrochemischen Speichervorrichtung, die in einem Faserverbundbauteil gebildet ist.

In der Harzmatrix 5 bildet das Elektrolytmaterial 3 Einlagerungen 6 aus. Diese Einlagerungen 6 sind aufgrund der Tendenz von sich nicht verbindenden Flüssigkeiten, wo immer möglich Kugeln zu bilden, sphärisch ausgeformt, da sich das Elektrolytmaterial 3 in dem noch flüssigen Harz 4 nicht mit diesem verbunden hat. Das Elektrolytbauteil 1 bzw. der Elektrolyt 2 und die Einlagerungen 6 sind hier nur symbolisch dargestellt. Das Elektrolytbauteil 1 kann jede beliebige Form annehmen. Der Elektrolyt 2 oder das Elektrolytbauteil 1 kann jeder Form folgen, die durch eine elektrochemische Speichervorrichtung vorgegeben ist, in der der Elektrolyt 2 angeordnet ist oder für die das Elektrolytbauteil 1 vorgesehen ist. Das Elektrolytbauteil 1 kann insbesondere eine Platte oder Folie sein, wie diese in Fig. 1 schematisch dargestellt ist. Die Einlagerungen 6 sind aber in einer solchen Folie oder Platte verhältnismäßig sehr viel kleiner (in einer Größenordnung von ≲ 500 µm bei makroskopischen Folien- oder Plattenabmessungen) und zahlreicher als dies in Fig. 1 schematisch dargestellt ist.

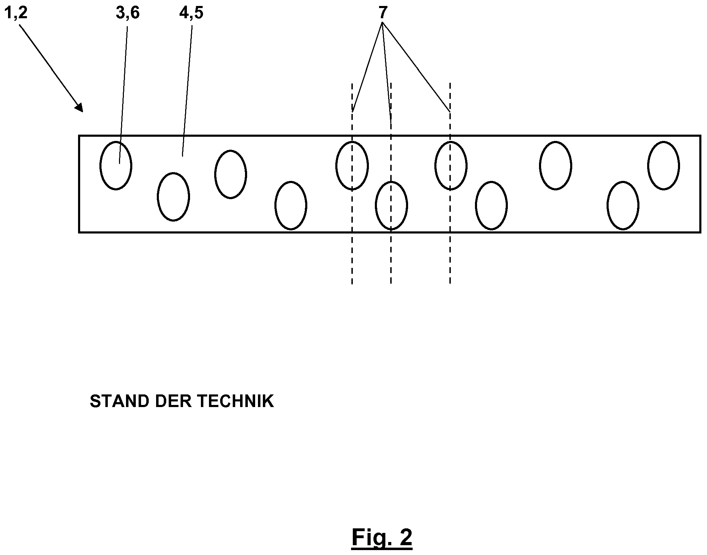

Das Gleiche gilt für die Darstellung in **Fig. 2****.** In Fig. 2 ist demgegenüber aber schematisch dargestellt, dass die Einlagerungen 6 nicht sphärisch sind, sondern entlang einer Vorzugsrichtung 7 langgestreckt. Die Vorzugsrichtung 7 kann wie hier etwa senkrecht zu einer Haupterstreckungsrichtung des Elektrolyten 2 oder des Elektrolytbauteils 1 liegen. Grundsätzlich kann sie aber jeden Winkel zu der Haupterstreckungsrichtung einnehmen, einschließlich eines parallelen Verlaufs. Die Einlagerungen 6 müssen auch nicht wie dargestellt alle die exakt gleiche Orientierung entlang der Vorzugsrichtung 7 aufweisen, sondern können leichte individuelle Abweichungen von der Vorzugsrichtung 7 aufweisen, die herstellungsbedingt und zufällig verteilt sein können.

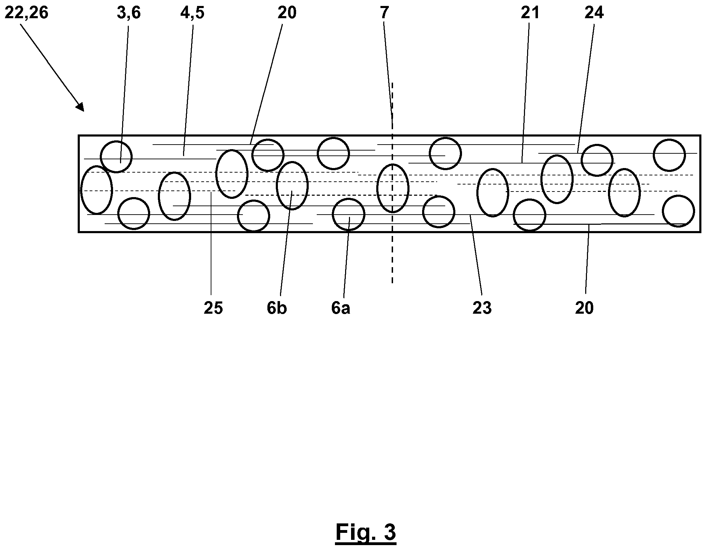

**Fig. 3** zeigt schematisch ein Faserverbundbauteil 22 oder eine Faserverbundstruktur 31, das oder die solche entlang der Vorzugsrichtung 7 langgestreckten Einlagerungen 6 aufweist. Die Einlagerungen 6 sind wie in Fig. 2 in einer mit einem Elektrolytmaterial 3 dotierten Harzmatrix 5 ausgebildet. Im Unterschied zu Fig. 2 sind hier zusätzlich Fasern 20 in die Harzmatrix 5 eingebettet. Die Fasern 20 sind elektrisch leitfähig. Zwischen den Fasern 20 sind weitere Fasern 21 angeordnet, hier gestrichelt dargestellt, die nicht elektrisch leitfähig sind. Die Fasern 20, 21 sind hier nur symbolisch dargestellt. Insbesondere sind die Fasern 20, 21 weder in ihrer tatsächlichen Dichte noch in einem korrekten Größen- oder Längenverhältnis zu dem Faserverbundbauteil 22 und den Einlagerungen 6 dargestellt, und sie können, anders als hier dargestellt ist, einander berühren, insbesondere zur Ausbildung einer Elektrode 23 und einer Gegenelektrode 24 aus den elektrisch leitfähigen Fasern 20. Die zwischen der Elektrode 23 und der Gegenelektrode 24 angeordneten elektrisch nicht leitfähigen Fasern 21 bilden einen Separator 25. Das Faserverbundbauteil 22 ist somit eine elektrochemische Speichervorrichtung 26.

Die Einlagerungen 6 sind hier teilweise sphärische Einlagerungen 6a und teilweise nicht-sphärische, langgestreckte Einlagerungen 6b. Die spezielle geometrische Form der Einlagerungen 6 wird erreicht, wie im Folgenden erläutert:

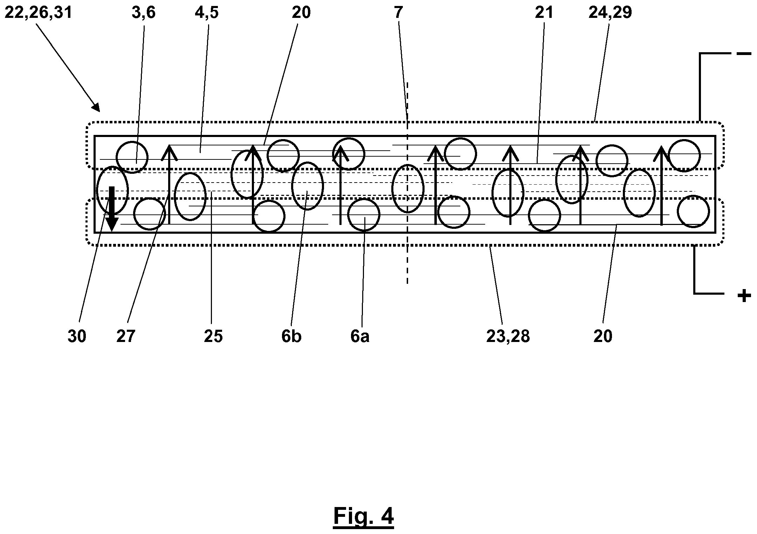

**Fig. 4** zeigt das Faserverbundbauteil 22 oder die Faserverbundstruktur 31 bzw. die elektrochemische Speichervorrichtung 26 während eines Aushärtens des Harzes 4, mit dem die Fasern 20, 21 infundiert sind, zu der Harzmatrix 5. An die Elektrode 23 und die Gegenelektrode 24, die hier mit gepunkteten Linien umrandet sind, ist eine Spannung angelegt, sodass sich ein elektrisches Feld 27 ergibt. Die Elektrode 23 bildet hier eine Anode 28, die Gegenelektrode 24 eine Kathode 29.

Auf eine negative Ladung wirkt somit eine elektrische Feldkraft 30, und auf eine positive Ladung wirkt eine entgegengerichtete elektrische Feldkraft (hier nicht dargestellt). Bei dem Elektrolytmaterial 3, mit dem das Harz 4 dotiert ist, handelt es sich um ein Material mit beweglichen Ionen, vorzugsweise eine Flüssigkeit wie eine ionische Flüssigkeit oder ein gelöstes Salz. Auf diese Art und Weise sind die Ionen in dem Elektrolytmaterial 3 beweglich. Negativ geladene Ionen des Elektrolytmaterials 3 werden daher mit dem Anlegen des elektrischen Felds 27 mit der elektrischen Feldkraft 30 in Richtung auf die Anode 28, nämlich die Elektrode 23, beaufschlagt. Positiv geladenen Ionen des Elektrolytmaterials 3 werden in entgegengesetzter Richtung auf die Kathode 29, nämlich die Gegenelektrode 24, beaufschlagt. Die Ionen werden in ihrer Beweglichkeit auch an den Grenzflächen zwischen dem Elektrolyten 3 und dem Harz 4 durch das zu diesem Zeitpunkt flüssige oder viskose Harz 4 nicht oder nur wenig gehindert, sodass sie durch ihre Bewegung die Einlagerungen 6 des Elektrolytmaterials 3 unter Verdrängung des flüssigen oder viskosen Harzes 4 zu nicht-sphärischen, langgestreckten Einlagerungen 6b verformen können. Die Ionen bewegen sich dabei entlang der Vorzugsrichtung 7, die parallel zu den Feldlinien des elektrischen Felds 27 und damit auch der elektrischen Feldkraft 30 verläuft. Die Einlagerungen 6 werden somit entlang der Vorzugsrichtung 7 auseinandergezogen. Durch ein Aushärten des Harzes 4 zu der Harzmatrix 5 werden die nicht-sphärischen, langgestreckten Einlagerungen 6b in ihrer Form fixiert.

Dies trifft aber nur auf die Einlagerungen 6 zu, die wenigstens überwiegend zwischen der Elektrode 23 und der Gegenelektrode 24 angeordnet sind. Auf die Einlagerungen 6, die wenigstens überwiegend in der Elektrode 23 oder der Gegenelektrode 24 angeordnet sind, wirkt das elektrische Feld 27 nicht oder nur schwächer, sodass diese Einlagerungen gar nicht oder nur schwach verformt werden und im Wesentlichen sphärische Einlagerungen 6a bleiben. Auch die im Wesentlichen sphärischen Einlagerungen 6a werden durch das Aushärten des Harzes 4 zu der Harzmatrix 5 in ihrer Form fixiert.

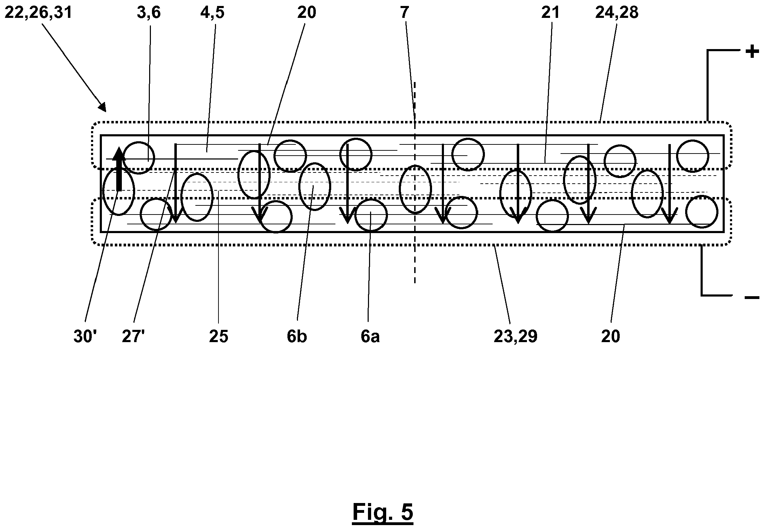

In **Fig. 5** ist das elektrische Feld 27' umgekehrt. Die Elektrode 23 bildet nun die Kathode 29 und die Gegenelektrode 24 bildet die Anode 28. Damit hat auch die elektrische Feldkraft 30' eine umgekehrte Richtung. Negativ geladene Ionen des Elektrolytmaterials 3 werden daher mit dem Anlegen des elektrischen Felds 27' durch die elektrische Feldkraft 30' in Richtung auf die Anode 28, nämlich die Gegenelektrode 24, beaufschlagt. Positiv geladenen Ionen des Elektrolytmaterials 3 werden in entgegengesetzter Richtung auf die Kathode 29, nämlich die Elektrode 23, beaufschlagt.

Wiederum können die Ionen durch ihre Bewegung die Einlagerungen 6 des Elektrolytmaterials 3 unter Verdrängung des flüssigen oder viskosen Harzes 4 zu nicht-sphärischen, entlang der Vorzugsrichtung 7 langgestreckten Einlagerungen 6b verformen. Die Ionen bewegen sich dabei entlang der Vorzugsrichtung 7, die parallel zu den Feldlinien des elektrischen Felds 27' und damit auch der elektrischen Feldkraft 30' verläuft. Durch das Aushärten des Harzes 4 zu der Harzmatrix 5 werden die nicht-sphärischen, langgestreckten Einlagerungen 6b und auch die hier ebenfalls im Wesentlichen sphärisch bleibenden Einlagerungen 6a im Bereich der Elektrode 23 und der Gegenelektrode 24 in ihrer Form fixiert.

Es kann auch stets zwischen den Zuständen nach Fig. 4 und Fig. 5 gewechselt werden - oder, mit anderen Worten, ein elektrisches Wechselfeld angelegt werden. Dann werden die Ionen zwischen der Elektrode 23 und der Gegenelektrode 24 durch die ständig umkehrende elektrische Feldkraft 30, 30' "hin- und hergezogen" und geraten so in Bewegung, wobei sie sich entlang der Vorzugsrichtung 7 bewegen, die parallel zu den Feldlinien des elektrischen Felds 27, 27' und damit auch der elektrischen Feldkraft 30, 30' verläuft. Die Einlagerungen 6 werden somit entlang der Vorzugsrichtung 7 zu nicht-sphärischen, langgestreckten Einlagerungen 6b auseinandergezogen. Die Einlagerungen 6 im Bereich der Elektrode 23 und der Gegenelektrode 24 werden auch in diesem Fall durch das elektrische (Wechsel-)Feld 27, 27' nicht oder nur wenig beeinflusst und bleiben daher im Wesentlichen sphärische Einlagerungen 6a. Durch das Aushärten des Harzes 4 zu der Harzmatrix 5 werden die nicht-sphärischen, langgestreckten Einlagerungen 6b und die im Wesentlichen sphärischen Einlagerungen 6a in ihrer Form fixiert.

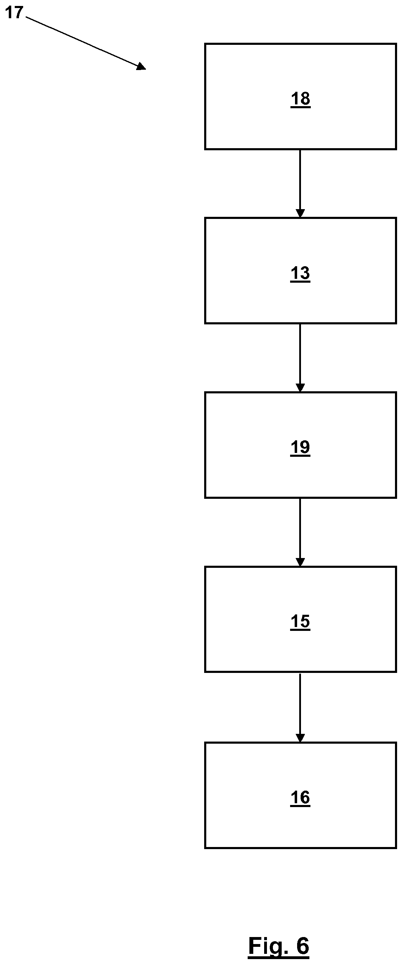

**Fig. 6** zeigt ein Ablaufdiagramm eines Verfahrens 17 zur Herstellung einer als elektrochemische Speichervorrichtung 26 ausgebildeten Faserverbundstruktur 31. Dabei werden in einem Schritt 18 die elektrisch leitfähigen Fasern 20 zu der Elektrode 23 und der Gegenelektrode 24 angeordnet. Dabei können auch elektrisch nicht leitfähige Fasern 21 als Separator zwischen der Elektrode 23 und der Gegenelektrode 24 angeordnet werden. In einem Schritt 13 wird das Harz 4 mit dem Elektrolytmaterial 3 dotiert. In einem Schritt 19 werden die Fasern 20, 21 mit dem dotierten Harz 4 getränkt. In Schritten 15 und 16 wird eine Spannung, insbesondere eine Wechselspannung, an die Elektrode 23 und die Gegenelektrode 24 angelegt und unter Einfluss dieser Spannung das Harz 4 ausgehärtet. Durch das Anlegen der Spannung werden die Ionen in dem Elektrolytmaterial 3 in Bewegung versetzt. Wenn in dem Schritt 16 das Harz 4 ausgehärtet wird, wobei weiterhin die elektrische Spannung an der Elektrode 23 und der Gegenelektrode 24 anliegt, bedeutet das, noch während des Aushärtens des Harzes 4 befinden sich die Ionen in dem Elektrolytmaterial 3 in Bewegung. Wenn es sich bei der anliegenden Spannung um eine Wechselspannung handelt, ändert sich die Bewegungsrichtung der Ionen ständig.

Über eine Amplitude und eine Frequenz der Spannung kann die Stärke der Bewegung der Ionen gesteuert werden. Für eine höhere Spannung bzw. eine höhere Amplitude der Wechselspannung werden die Ionen stärker beschleunigt und ggf. für eine höhere Frequenz der Wechselspannung erfolgt die Bewegung der Ionen über längere Zeit in eine Richtung, bevor ihre Bewegungsrichtung durch die Richtungsänderung der Wechselspannung umgekehrt wird. Auf diese Art und Weise kann gesteuert werden, in welcher Form und Größe sich Einlagerungen 6 des Elektrolytmaterials 3 in dem Harz 4 ausbilden. Ohne Einfluss der Spannung würden sich etwa sphärische Einlagerungen 6 bilden. Unter Einfluss der Spannung werden diese Einlagerungen 6 verzerrt und werden dadurch beispielsweise oval oder können sogar so beeinflusst werden, dass sie Kanäle in dem Harz 4 ausbilden.

Indem in dem Schritt 16 das Harz 4 zu einer Harzmatrix 5 ausgehärtet wird, werden diese gebildeten Einlagerungen 6 in der Harzmatrix 5 fixiert. In dem fertigen Elektrolytbauteil 1 beeinflussen sie dann nicht nur die elektrolytischen Eigenschaften, sondern, da sie die Struktur der Harzmatrix 5 direkt beeinflussen, auch die mechanischen Eigenschaften.

Im Verfahren 17 wird der erfindungsgemäß hergestellte Elektrolyt direkt mit einer Faserverbundstruktur 31 integriert. Vorteil des Verfahrens 17 ist ein vereinfachtes Herstellungsverfahren, in dem die in der elektrochemischen Speichervorrichtung selbst ausgebildete Elektrode 23 und Gegenelektrode 24 für das erfindungsgemäße Verfahren 17 genutzt werden und eine individuell hergestellte Faserverbundstruktur 31, die beispielsweise an bestimmte Anforderungen angepasst werden kann und die integral als ein Bauteil 22 ausgebildet ist.

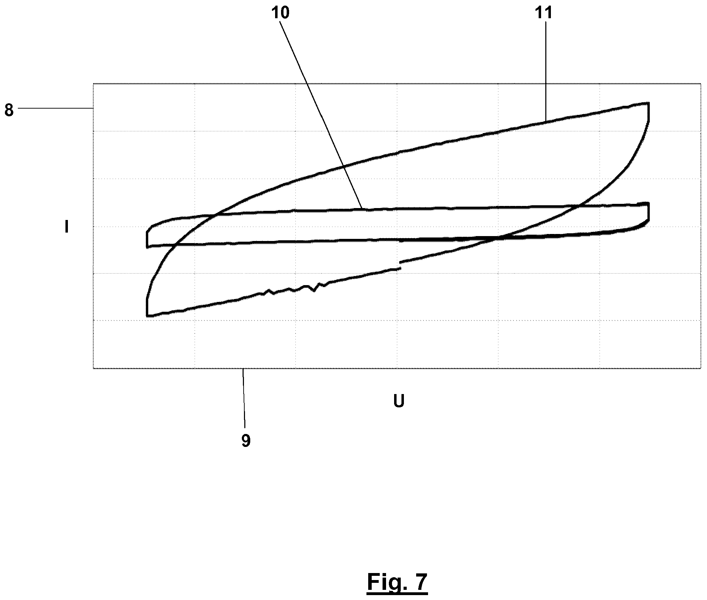

**Fig. 7** zeigt ein Diagramm, in dem ein Strom 8 (I) gegen eine Spannung 9 (U) aufgetragen ist. In dem Diagramm aufgetragen ist eine Cyclovoltammetriekurve 10 für einen Elektrolyten in einer elektrochemischen Speichervorrichtung nach dem Stand der Technik und eine Cyclovoltammetriekurve 11 für einen Elektrolyten 2 in einer elektrochemischen Speichervorrichtung 26 gemäß der Erfindung. Für eine Cyclovoltammetrie wird eine sägezahnartig variierte Spannung an eine mit dem Elektrolyten 2 gebildete elektrochemische Speichervorrichtung 26, hier konkret einen Kondensator, angelegt, wobei während der Variation der Spannung von einem Minimum zu einem Maximum und zurück zu dem Minimum (oder umgekehrt) die gezeigte Kurve jeweils einmal durchlaufen wird. Eine Kapazität der elektrochemischen Speichervorrichtung mit dem Elektrolyten nach dem Stand der Technik bzw. der elektrochemischen Speichervorrichtung 26 mit dem Elektrolyten 2 ergibt sich aus der Integration unter der jeweiligen Cyclovoltammetriekurve 10, 11.

Der erfindungsgemäße Elektrolyt 2 wurde während des Aushärtens mit einer Wechselspannung mit einer Frequenz von 10 Hz und einer Amplitude von 2 V zwischen -1 V und +1 V behandelt. Zu erkennen ist, dass die in der Cyclovoltammetriekurve 11 eingeschlossene Fläche für den erfindungsgemäßen Elektrolyten 2 wesentlich größer ist als für die Cyclovoltammetriekurve 10 an dem Elektrolyten nach dem Stand der Technik. Dies bedeutet, dass für den erfindungsgemäßen Elektrolyten 2 die Kapazität bei ansonsten gleicher Bauweise nur durch die erfindungsgemäße Behandlung mit der Wechselspannung wesentlich größer ist als für den Elektrolyten gemäß dem Stand der Technik.

### BEZUGSZEICHENLISTE

- 1: Elektrolytbauteil
- 2: Elektrolyt
- 3: Elektrolytmaterial
- 4: Harz
- 5: Harzmatrix
- 6: Einlagerung
- 7: Vorzugsrichtung
- 8: Strom
- 9: Spannung
- 10: Cyclovoltammetriekurve
- 11: Cyclovoltammetriekurve
- 13: Schritt
- 15: Schritt
- 16: Schritt
- 17: Verfahren
- 18: Schritt
- 19: Schritt
- 20: Faser
- 21: Faser
- 22: Faserverbundbauteil
- 23: Elektrode
- 24: Gegenelektrode
- 25: Separator
- 26: elektrochemische Speichervorrichtung
- 27: elektrisches Feld
- 28: Anode
- 29: Kathode
- 30: elektrische Feldkraft
- 31: Faserverbundstruktur

## Patentansprüche

1. Verfahren (17) zur Herstellung einer als Akkumulator oder Kondensator ausgebildeten Faserverbundstruktur (31) mit den Schritten (18, 13, 19, 15, 16)
- Anordnen elektrisch leitfähiger Fasern (20) zu einer Elektrode (23) und einer Gegenelektrode (24) des Akkumulators oder Kondensators,
- Dotieren eines Harzes (4) mit einem Elektrolytmaterial (3),
- Tränken der Fasern (20) mit dem dotierten Harz (4) und
- Aushärten des Harzes (4) zu einer Harzmatrix (5),
**dadurch gekennzeichnet,**
- **dass** das Harz (4) mit einem Elektrolytmaterial (3) dotiert wird, das dazu neigt, sphärische Einlagerungen (6) in dem Harz (4) auszubilden, und
- **dass** während des Aushärtens eine elektrische Spannung an die Elektrode (23) und die Gegenelektrode (24) angelegt wird, so dass das Elektrolytmaterial (3) nicht-sphärische, in eine Vorzugsrichtung orientierte Einlagerungen (6) in der Harzmatrix (5) ausbildet.

2. Verfahren (17) nach Anspruch 1, **dadurch gekennzeichnet, dass** vor dem Tränken der Fasern (20) mit dem Harz (4) elektrisch nicht leitfähige Fasern (21) als ein Separator (25) zwischen der Elektrode (23) und der Gegenelektrode (24) angeordnet werden.

3. Verfahren (17) nach einem der vorhergehenden Ansprüche, **dadurch gekennzeichnet, dass** das Elektrolytmaterial (3) eine ionische Flüssigkeit oder ein in einem Lösungsmittel gelöstes Salz ist.

4. Verfahren (17) nach einem der vorhergehenden Ansprüche, **dadurch gekennzeichnet, dass** das Harz (4) ein Epoxid ist.

5. Verfahren (17) nach einem der vorhergehenden Ansprüche, **dadurch gekennzeichnet, dass** die angelegte Spannung in eine elektrische Feldstärke von 3000 V/m bis 300.000 V/m resultiert.

6. Verfahren (17) nach einem der vorhergehenden Ansprüche, **dadurch gekennzeichnet, dass** die Spannung eine Wechselspannung ist.

7. Verfahren (17) nach Anspruch 6, **dadurch gekennzeichnet, dass** die Wechselspannung eine Amplitude von 1 V bis 10 V aufweist.

8. Verfahren (17) nach Anspruch 6 oder 7, **dadurch gekennzeichnet, dass** die Wechselspannung eine Frequenz von 5 Hz bis 15 Hz aufweist.

9. Faserverbundbauteil (22), das als Akkumulator oder Kondensator ausgebildet ist, mit
- elektrisch leitfähigen Fasern (20), die eine Elektrode (23) und eine Gegenelektrode (24) des Akkumulators oder Kondensators ausbilden, und
- einer Harzmatrix (5), die mit einem Elektrolytmaterial (3) dotiert ist und in die die Fasern (20) eingebettet sind,
**dadurch gekennzeichnet,**
- **dass** die Harzmatrix (5) mit einem Einlagerungen (6) in der Harzmatrix (5) ausbildenden Elektrolytmaterial (3) dotiert ist und
- **dass** das Elektrolytmaterial (3) nicht-sphärische, in eine Vorzugsrichtung (7) orientierte Einlagerungen (6, 6b) in der Harzmatrix (5) ausbildet.

10. Faserverbundbauteil (22) nach Anspruch 9, **dadurch gekennzeichnet, dass** elektrisch nicht leitfähige Fasern (21) zwischen den elektrisch leitfähigen Fasern (20) angeordnet sind und einen Separator (25) ausbilden.

11. Faserverbundbauteil (22) nach Anspruch 10, **dadurch gekennzeichnet, dass** die nicht-sphärischen Einlagerungen (6, 6b) im Bereich der nicht leitfähigen Fasern (21) angeordnet sind.

12. Faserverbundbauteil (22) nach einem der Ansprüche 9 bis 11, **dadurch gekennzeichnet, dass** das Elektrolytmaterial (3) sphärische Einlagerungen (6, 6a) in der Harzmatrix (5) ausbildet.

13. Faserverbundbauteil (22) nach Anspruch 12, **dadurch gekennzeichnet, dass** die sphärischen Einlagerungen (6, 6a) im Bereich der leitfähigen Fasern (20) angeordnet sind.

14. Faserverbundbauteil (22) nach einem der Ansprüche 9 bis 13, **dadurch gekennzeichnet, dass** die Harzmatrix (5) ein Epoxid ist.

15. Faserverbundbauteil (22) nach einem der Ansprüche 9 bis 14, das einen Kondensator ausbildet, **dadurch gekennzeichnet, dass** der Kondensator ein Superkondensator ist.

## Claims

1. Method (17) for producing a fiber composite structure (31) designed as an accumulator or a capacitor, comprising the steps (18, 13, 19, 15, 16)
- arranging electrically conductive fibers (20) to form an electrode (23) and a counter-electrode (24) of the accumulator or capacitor,
- doping a resin (4) with an electrolyte material (3),
- impregnating the fibers (20) with the doped resin (4), and
- curing the resin (4) into a resin matrix (5),
**characterized in**
- **that** the resin (4) is doped with an electrolyte material (3) which tends to form spherical inclusions (6) in the resin (4), and
- **that**, during curing, an electric voltage is applied to the electrode (23) and the counter-electrode (24) such that the electrolyte material (3) forms non-spherical inclusions (6) in the resin matrix (5) which are oriented in a preferential direction.

2. Method (17) of claim 1, **characterized in that** prior to impregnating the fibers (20) with the resin (4) electrically non-conductive fibers (21) are arranged between the electrode (23) and the counter-electrode (24) as a separator (25).

3. Method (17) of any of the preceding claims, **characterized in that** the electrolyte material (3) is an ionic liquid or a salt dissolved in a solvent.

4. Method (17) of any of the preceding claims, **characterized in that** the resin (4) is an epoxide.

5. Method (17) of any of the preceding claims, **characterized in that** the voltage applied results in an electric field strength of 3,000 V/m to 300,000 V/m.

6. Method (17) of any of the preceding claims, **characterized in that** the voltage is an alternating voltage.

7. Method (17) of claim 6, **characterized in that** the alternating voltage has an amplitude of 1 Vto 10 V.

8. Method (17) of claims 6 or 7, **characterized in that** the alternating voltage has a frequency of 5 Hz to 15 Hz.

9. Fiber composite component (22) which is made as an accumulator or capacitor, comprising
- electrically conductive fibers (20) which form an electrode (23) and a counter-electrode (24) of the accumulator or capacitor, and
- a resin matrix (5) which is doped with an electrolyte material (3) and in which the fibers (20) are embedded,
**characterized in**
- **that** the resin matrix (5) is doped with an electrolyte material (3) forming inclusion (6) in the resin matrix (5), and
- **that** the electrolyte material (3) forms non-spherical inclusions (6, 6b) in the resin matrix (5) which are oriented in a preferential direction (7).

10. Fiber composite component (22) of claim 9, **characterized in that** electrically non-conductive fibers (21) are arranged between the electrically conductive fibers (20) and form a separator (25).

11. Fiber composite component (22) of claim 10, **characterized in that** the non-spherical inclusion (6, 6b) are located in the area of the non-conductive fibers (21).

12. Fiber composite component (22) of any of the claims 9 to 11, **characterized in that** the electrolyte material (3) forms spherical inclusions (6, 6a) in the resin matrix (5).

13. Fiber composite component (22) of claim 12, **characterized in that** the spherical inclusion (6, 6a) are arranged in the area of the conductive fibers (20).

14. Fiber composite component (22) of any of the claims 9 to 13, **characterized in that** the resin matrix (5) is an epoxide.

15. Fiber composite component (22) of any of the claims 9 to 14 forming a capacitor, **characterized in that** the capacitor is super capacitor.

## Revendications

1. Procédé (17) pour la fabrication d'une structure composite (31) formée en tant qu'accumulateur ou condensateur, comprenant les étapes (18, 13, 19, 15, 16) suivantes :
- disposition de fibres électroconductrices (20) pour former une électrode (23) et une contre-électrode (24) de l'accumulateur ou du condensateur,
- dopage d'une résine (4) avec un matériau électrolytique (3),
- imprégnation des fibres (20) avec la résine dopée (4),
- durcissement de la résine (4) pour former une matrice de résine (5),
**caractérisé en ce que**
- la résine (4) est dopée avec un matériau électrolytique (3) ayant tendance à former des incrustations sphériques (6) dans la résine (4), et
- une tension électrique est appliquée aux électrodes (23) et contre-électrodes (24) pendant le durcissement, de sorte que le matériau électrolytique (3) forme des incrustations non sphériques orientées dans une direction préférentielle (6) dans la matrice de résine (5).

2. Procédé (17) selon la revendication 1, **caractérisé en ce que** des fibres électriquement non conductrices (21) sont disposées en tant que séparateur (25) entre l'électrode (23) et la contre-électrode (24) avant l'imprégnation des fibres (20) avec la résine (4).

3. Procédé (17) selon l'une des revendications précédentes, **caractérisé en ce que** le matériau électrolytique (3) est un liquide ionique ou un sel dissous dans un solvant.

4. Procédé (17) selon l'une des revendications précédentes, **caractérisé en ce que** la résine (4) est une résine époxy.

5. Procédé (17) selon l'une des revendications précédentes, **caractérisé en ce que** la tension appliquée résulte en une densité de champ électrique de 3000 V/m à 300 000 V/m.

6. Procédé (17) selon l'une des revendications précédentes, **caractérisé en ce que** la tension appliquée est une tension alternative.

7. Procédé (17) selon la revendication 6, **caractérisé en ce que** la tension alternative a une amplitude de 1 V à 10 V.

8. Procédé (17) selon la revendication 6 ou 7, **caractérisé en ce que** la tension alternative a une fréquence de 5 Hz à 15 Hz.

9. Composant composite (22) formé en tant qu'accumulateur ou condensateur, avec
- des fibres électroconductrices (20) formant une électrode (23) et une contre-électrode (24) de l'accumulateur ou du condensateur et
- une matrice de résine (5) dopée avec un matériau électrolytique (3) et dans laquelle les fibres (20) sont incorporées,
**caractérisé en ce que**
- la matrice de résine (5) est dopée avec un matériau électrolytique (3) formant des incrustations (6) dans la matrice de résine (5) et
- le matériau électrolytique (3) forme des incrustations (6, 6b) non sphériques orientées dans une direction préférentielle (7) dans la matrice de résine (5).

10. Composant composite (22) selon la revendication 9, **caractérisé en ce que** des fibres électriquement non conductrices (21) sont disposées entre les fibres électroconductrices (20) pour former un séparateur (25).

11. Composant composite (22) selon la revendication 10, **caractérisé en ce que** les incrustations non sphériques (6, 6b) sont disposées dans la zone des fibres non conductrices (21).

12. Composant composite (22) selon l'une des revendications 9 à 11, **caractérisé en ce que** le matériau électrolytique (3) forme des incrustations sphériques (6, 6a) dans la matrice de résine (5).

13. Composant composite (22) selon la revendication 12, **caractérisé en ce que** les incrustations sphériques (6, 6a) sont disposées dans la zone des fibres électroconductrices (20).

14. Composant composite (22) selon l'une des revendications 9 à 13, **caractérisé en ce que** la matrice de résine (5) est une résine époxy.

15. Composant composite (22) selon l'une des revendications 9 à 14, formant un condensateur, **caractérisé en ce que** le condensateur est un super-condensateur.
